# EUROPEAN PATENT SPECIFICATION

(11) **EP 4 336 074 B1**
(45) Date of publication and mention of the grant of the patent: **10.06.2026**
(21) Application number: 22840979.3
(22) Date of filing: 01.04.2022
(51) Int. Cl.: B60C 23/00, B60T 8/172, B60C 23/04

(54) **TIRE PRESSURE ADJUSTMENT METHOD, AND TIRE PRESSURE ADJUSTMENT APPARATUS**
REIFENDRUCKEINSTELLVERFAHREN UND REIFENDRUCKEINSTELLVORRICHTUNG
PROCÉDÉ DE RÉGLAGE DE PRESSION DE PNEUS ET APPAREIL DE RÉGLAGE DE PRESSION DE PNEUS

(30) Priority: 14.07.2021 CN 202110793088
(43) Date of publication of application: 13.03.2024
(73) Proprietor: Yinwang Intelligent Technologies Co., Ltd., Shenzhen, Guangdong 518110 (CN)
(72) Inventor: CHEN, Qingxue, Shenzhen, Guangdong 518129 (CN)
(74) Representative: MERH-IP Matias Erny Reichl Hoffmann Patentanwälte PartG mbB
(86) International application number: PCT/CN2022/084882
(87) International publication number: WO 2023/284335

(56) References cited:
- CN-A- 1 273 924
- CN-A- 101 021 186
- CN-A- 102 463 970
- CN-A- 102 463 970
- CN-A- 103 507 792
- CN-A- 103 770 582
- CN-A- 111 661 020
- CN-A- 111 661 020
- CN-U- 205 715 848
- CN-U- 205 715 848
- US-A1- 2004 065 365

## Description

### TECHNICAL FIELD

This application relates to the field of automobile technologies, and in particular, to a valve, a tire pressure adjustment method, and a tire pressure adjustment apparatus.

### BACKGROUND

At present, most new vehicles delivered from the factory are configured with autonomous emergency braking (autonomous emergency braking, AEB). A vehicle with the AEB can use a radar to measure a distance between the vehicle and a vehicle ahead or an obstacle, and then use a data analysis module to compare the measured distance with a safe distance. If the measured distance is less than the safe distance, even if a driver does not have time to press a brake pedal, the AEB system is still started to automatically brake the vehicle, so that safe driving is ensured.

However, existing AEB can avoid collision between a vehicle and an obstacle only in some scenarios. When a distance between the vehicle and the obstacle is very short and a vehicle velocity is relatively high, the existing AEB cannot avoid collision between the vehicle and the obstacle.

CN 102 463 970 A discloses an automobile short-distance braking control device and an automobile short-distance braking control method using the same. Automobile tire pressure can be reduced rapidly in a short time, so that the area of each tire in contact with the ground is increased, the frictional force between the tires and the ground is increased, the braking distance of the vehicle is shortened, and the collision of the moving vehicle against front vehicles or barriers is avoided. During the vehicle moving process, the space and the relative speed between the vehicle and the front vehicles or barriers are detected by using radar. When detecting that the collision can be avoided by using emergent braking, the radar sends a signal to an ECU (Electronic Control Unit), the ECU sends a signal to an intelligent tire deflation device after calculation and a deflation valve is opened by the intelligent tire deflation device to deflate, so that the tire pressure is reduced to a setting value in a short time.

CN 111 661 020 A discloses a braking method and braking system. The method comprises the steps of obtaining the distance between the vehicle and a front obstacle in the driving process of the vehicle, acquiring vehicle driving parameters of the vehicle, determining a braking distance of the vehicle according to the vehicle driving parameters, calculating the distance difference between the vehicle distance and the braking distance, and judging whether the distance difference is larger than a preset first threshold value or not. Under the condition that the distance difference is not greater than the preset first threshold value, determining a braking object and braking parameters corresponding to the distance difference, and controlling the braking object according to the braking parameters so as to realize braking of the vehicle.

CN 205 715 848 U discloses an automobile gas regulation valve.

### SUMMARY

This invention provides a valve, a tire pressure adjustment method, and a tire pressure adjustment apparatus, to reduce a probability of collision between a vehicle and an object. To achieve the foregoing objective, the following technical solutions are used in this invention.

According to a first aspect, this invention provides a valve, and the valve includes a stem. A valve core and a fixed iron core are disposed inside the stem, a coil is wound at an outer base of the stem, the fixed iron core is fixed at an inner base of the stem, and the coil includes an interface configured to connect to a power supply. The valve core includes a valve core housing, a movable iron core, and a spring connected to the movable iron core, and an air hole is disposed at the top of the valve core housing. When the coil is not powered on, the spring generates an upward force on the movable iron core, so that the movable iron core is connected to the bottom of the valve core housing. When the coil is powered on, the bottom of the valve core housing separates from the movable iron core, and air inside the stem enters the valve core through the bottom of the valve core housing and comes out from the air hole at the top of the valve core housing.

By using the valve provided in this invention, the movable iron core may separate from the bottom of the valve core housing through power-on control as needed, so that air inside a tire of a vehicle enters the valve through the bottom of the valve core housing and comes out from the air hole at the top of the valve core housing, thereby reducing a tire pressure of the tire of the vehicle, increasing a coefficient of friction between the tire of the vehicle and a road surface, and reducing a safe braking distance of the vehicle. In this way, the reduced safe braking distance of the vehicle is greater than a distance between the vehicle and an obstacle, so that collision between the vehicle and the obstacle is avoided. A probability of collision between the vehicle and an object is reduced, and driving safety is improved.

In a possible implementation, when the coil is powered on, the fixed iron core generates a magnetic field force to attract the movable iron core to separate from the bottom of the valve core housing, and the magnetic field force of the fixed iron core varies with different power supply voltages.

In this way, a power supply voltage of the coil may be adjusted, so that a degree of separation of the movable iron core from the bottom of the valve core housing changes, to adjust an exhaust velocity of the valve.

In a possible implementation, the valve further includes a tire pressure sensor.

In this way, the tire pressure of the tire of the vehicle may be detected by using the tire pressure sensor in the valve, so that a user can learn about the tire pressure of the tire of the vehicle and take a corresponding measure when the tire pressure is anomalous (for example, the tire pressure is excessively low, the tire pressure is excessively high, or the tire pressure is unbalanced), thereby further improving driving safety.

According to a second aspect, this invention provides a tire pressure adjustment method. The method includes: obtaining a first distance, where the first distance is a distance between a vehicle and a target object, and the target object is an object ahead the vehicle in a moving direction; determining a second distance, where the second distance is a safe braking distance of the vehicle; and if the first distance is less than the second distance, reducing a tire pressure of a tire based on the first distance and the second distance.

It can be learned that, according to the tire pressure adjustment method provided in this invention, when a distance between the vehicle and an obstacle is less than the safe braking distance of the vehicle, the tire pressure of the tire of the vehicle is adjusted to increase a coefficient of friction between the tire of the vehicle and a road surface, so that the safe braking distance of the vehicle is reduced. In this way, the reduced safe braking distance of the vehicle is greater than a distance between the vehicle and an obstacle, so that collision between the vehicle and the obstacle is avoided. A probability of collision between the vehicle and an object is reduced, and driving safety is improved.

In a possible implementation, the determining a second distance includes: obtaining a moving velocity of the vehicle and a coefficient of friction between the tire of the vehicle and a ground; and determining the second distance based on the moving velocity and the coefficient of friction.

Optionally, the second distance L may satisfy a formula: L=K(V*V)/(2µg). K is a weight coefficient, V is the moving velocity of the vehicle, µ is the coefficient of friction between the tire of the vehicle and a ground, and g is a gravity constant.

For example, if the obtained moving velocity V of the vehicle is 90 kilometers per hour, that is, 25 meters per second, the coefficient of friction µ between the tire of the vehicle and the ground is 0.7, the weight coefficient K is 0.8, and the gravity constant g is 9.8, it can be determined that the second distance L=0.8*(25*25)/(2*0.7*0.9)=396.8 meters.

In a possible implementation, the reducing a tire pressure of a tire based on the first distance and the second distance includes: determining a tire pressure adjustment value of the tire based on the first distance and the second distance; and reducing the tire pressure of the tire based on the tire pressure adjustment value.

In a possible implementation, the determining a tire pressure adjustment value of the tire based on the first distance and the second distance includes: determining a first difference value based on the first distance and the second distance, where the first difference value is a value of a difference between the second distance and the first distance; and determining the tire pressure adjustment value based on the first difference value.

For example, the first distance is 100 meters, the second distance is 101 meters, and the safe braking distance is reduced by 2 meters each time the tire pressure is reduced by 100 kilopascals (kPa). In this case, it can be determined that the first difference value is 101-100=1 meter based on the first distance and the second distance, and it can be determined that the tire pressure adjustment value is (1/2)* 100=50 kPa.

In a possible implementation, the reducing the tire pressure of the tire based on the tire pressure adjustment value includes: determining a target voltage based on the tire pressure adjustment value; and adjusting a power supply voltage of a valve of the tire based on the target voltage, where the valve exhausts air out of the tire after being powered on, and an exhaust velocity of the valve varies with different power supply voltages.

It can be understood that different tire pressure adjustment values require different exhaust velocities. Therefore, an exhaust velocity may be adjusted to be suitable for different tire pressure values by adjusting the power supply voltage of the valve of the tire. For example, when the tire pressure adjustment value is relatively large, a higher voltage value is allocated to enable the valve to exhaust air out at a high velocity. On the contrary, when the tire pressure adjustment value is relatively small, a lower voltage value is allocated to prevent the valve from exhausting air out fast, so that the valve exhausts air out at a low velocity, thereby avoiding excessive air exhaust of the valve.

In a possible implementation, the determining a target voltage based on the tire pressure adjustment value includes: determining that the target voltage is a first voltage if the tire pressure adjustment value is greater than a third threshold; or determining that the target voltage is a second voltage if the tire pressure adjustment value is less than or equal to a third threshold. The first voltage is greater than the second voltage.

In a possible implementation, the method further includes: outputting first information if a tire pressure value of any tire of the vehicle is less than a first threshold, where the first information indicates an excessively low tire pressure value of the tire of the vehicle.

It can be learned that, according to the tire pressure adjustment method provided in this invention, when the tire pressure of the tire of the vehicle is excessively low, a user may be notified of the excessively low tire pressure of the tire of the vehicle by using the first information, so that the user can inflate the tire of the vehicle in time to increase the tire pressure, thereby reducing a probability of a driving accident caused by the excessively low tire pressure of the vehicle, and further improving driving safety.

In a possible implementation, the method further includes: determining a second difference value if the tire pressure value of the tire of the vehicle is greater than or equal to the first threshold, where the second difference value is a value of a difference between a tire pressure value of a first tire of the vehicle and a tire pressure value of a second tire of the vehicle.

It can be learned that, according to the tire pressure adjustment method provided in this invention, when the tire pressure of the tire of the vehicle is unbalanced, the tire pressure of the tire of the vehicle may be adjusted, so that the tire pressure of the vehicle becomes balanced, thereby reducing a probability of a driving accident caused by the unbalanced tire pressure of the vehicle, and further improving driving safety.

According to a third aspect, this invention further provides a tire pressure adjustment apparatus. The apparatus includes a processor, and the processor is configured to: obtaining a first distance, where the first distance is a distance between a vehicle and a target object, and the target object is an object ahead the vehicle in a moving direction; determining a second distance, where the second distance is a safe braking distance of the vehicle; and if the first distance is less than the second distance, reducing a tire pressure of a tire based on the first distance and the second distance.

In a possible implementation, the processor is specifically configured to: obtain a moving velocity of the vehicle and a coefficient of friction between the tire of the vehicle and a ground; and determine the second distance based on the moving velocity and the coefficient of friction.

In a possible implementation, the processor is specifically configured to: determine a tire pressure adjustment value of the tire based on the first distance and the second distance; and reduce the tire pressure of the tire based on the tire pressure adjustment value.

In a possible implementation, the processor is further specifically configured to: determine a first difference value based on the first distance and the second distance, where the first difference value is a value of a difference between the second distance and the first distance; and determine the tire pressure adjustment value based on the first difference value.

In a possible implementation, the processor is further specifically configured to: determine a target voltage based on the tire pressure adjustment value; and adjust a power supply voltage of a valve of the tire based on the target voltage, where the valve exhausts air out of the tire after being powered on, and an exhaust velocity of the valve varies with different power supply voltages.

In a possible implementation, the processor is further configured to: output first information if a tire pressure value of any tire of the vehicle is less than a first threshold, where the first information indicates an excessively low tire pressure value of the tire of the vehicle.

In a possible implementation, the processor is further configured to: determine a second difference value if the tire pressure value of the tire of the vehicle is greater than or equal to the first threshold, where the second difference value is a value of a difference between a tire pressure value of a first tire of the vehicle and a tire pressure value of a second tire of the vehicle; and reduce a tire pressure of the first tire if the second difference value is greater than a second threshold.

According to a fourth aspect, an embodiment of this invention further provides a tire pressure adjustment apparatus. The apparatus includes at least one processor. When the at least one processor executes program code or instructions, the method according to the first aspect or any possible implementation of the first aspect is implemented.

Optionally, the tire pressure adjustment apparatus may further include at least one memory. The at least one memory is configured to store the program code or the instructions.

According to a fifth aspect, an embodiment of this invention further provides a chip, including an input interface, an output interface, and at least one processor. Optionally, the chip further includes a memory. The at least one processor is configured to execute code in the memory, and when the at least one processor executes the code, the chip implements the method according to the first aspect or any possible implementation of the first aspect.

Optionally, the chip may alternatively be an integrated circuit.

According to a sixth aspect, an embodiment of this invention further provides a terminal. The terminal includes the foregoing tire pressure adjustment apparatus or the foregoing chip. For example, the terminal is a vehicle.

According to a seventh aspect, this invention further provides a computer-readable storage medium, configured to store a computer program. The computer program includes the method according to the first aspect or any possible implementation of the first aspect.

According to an eighth aspect, an embodiment of this invention further provides a computer program product including instructions. When the computer program product runs on a computer, the computer is enabled to implement the method according to the first aspect or any possible implementation of the first aspect.

The valve, the tire pressure adjustment apparatus, the computer storage medium, the computer program product, the chip, and a communications system provided in embodiments are all for performing the tire pressure adjustment method provided above. Therefore, for beneficial effects that can be achieved by the valve, the tire pressure adjustment apparatus, the computer storage medium, the computer program product, the chip, and the communications system, refer to beneficial effects in the tire pressure adjustment method provided above. Details are not described herein again.

### BRIEF DESCRIPTION OF DRAWINGS

To describe technical solutions in embodiments of this application more clearly, the accompanying drawings for describing embodiments are briefly described below. It is clear that the accompanying drawings in the following descriptions show merely some embodiments of this application, and a person of ordinary skill in the art may still derive other drawings from these accompanying drawings without creative efforts.
FIG. 1 is a schematic diagram of a driving scenario according to an embodiment of this application;
FIG. 2 is a schematic diagram of a structure of a valve according to an embodiment of this application;
FIG. 3 is a schematic diagram of a structure of a vehicle according to an embodiment of this application;
FIG. 4 is a schematic flowchart of a tire pressure adjustment method according to an embodiment of this application;
FIG. 5 is a schematic diagram of another driving scenario according to an embodiment of this application;
FIG. 6 is a schematic diagram of a structure of a tire pressure adjustment apparatus according to an embodiment of this application;
FIG. 7 is a schematic diagram of a structure of another tire pressure adjustment apparatus according to an embodiment of this application; and
FIG. 8 is a schematic diagram of a structure of a chip according to an embodiment of this application.

### DESCRIPTION OF EMBODIMENTS

Technical solutions of embodiments of this application are clearly described below with reference to the accompanying drawings in embodiments of the invention. Clearly, the described embodiments are merely some of rather than all embodiments of the invention. The invention is only limited by the scope of the claims.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of this application, the terms "first", "second", and the like are intended to distinguish between different objects or distinguish between different processing on a same object, but do not indicate a particular order of the objects.

In addition, the terms "include", "have", or any other variant thereof in descriptions of this application are intended to cover a non-exclusive inclusion. For example, a process, a method, a system, a product, or a device that includes a series of steps or units is not limited to the steps or units listed above, and optionally, further includes another step or unit that is not listed herein, or optionally, further includes another step or unit inherent for the process, the method, the product, or the device.

It should be noted that, in the descriptions in embodiments of this application, "example", "for example", or the like represents giving an example, an illustration, or a description. Any embodiment or design scheme described as an "example" or with "for example" in embodiments of this application should not be explained as being more preferred or having more advantages than another embodiment or design scheme. Precisely, use of "example", "for example", or the like is intended to present a relative concept in a specific manner.

In the descriptions of this application, unless otherwise stated, "a plurality of" means two or more than two.

At present, most new vehicles are configured with AEB. A vehicle with the AEB can use a radar to measure a distance between the vehicle and a vehicle ahead or an obstacle, and then use a data analysis module to compare the measured distance with a safe distance. If the measured distance is less than the safe distance, the AEB system is started to automatically brake the vehicle before a driver has time to press a brake pedal, so that safe driving is ensured.

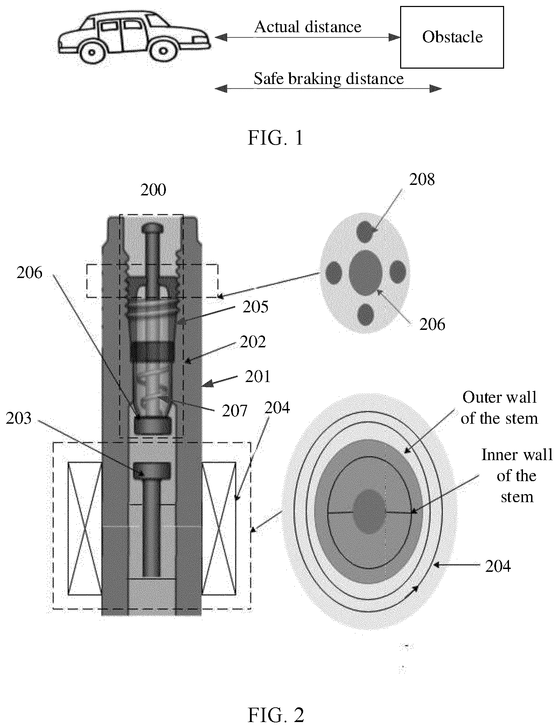

However, existing AEB can avoid collision between a vehicle and an obstacle only in some scenarios. When a distance between the vehicle and the obstacle is very short and a vehicle velocity is relatively high, the existing AEB cannot avoid collision between the vehicle and the obstacle. For example, in a scenario shown in FIG. 1, even if the AEB is started immediately to automatically brake a vehicle, because an actual distance between the vehicle and a target object is less than a safe braking distance of the vehicle, collision between the vehicle and the target object still cannot be avoided.

Therefore, an embodiment of this application provides a valve 200, to reduce a probability of collision between a vehicle and an object. FIG. 2 is a schematic diagram of a structure of the valve 200. As shown in FIG. 2, the valve 200 includes a stem 201. A valve core 202 and a fixed iron core 203 are disposed inside the stem, and the fixed iron core 203 is fixed at an inner base of the stem 201. A coil 204 is wound at an outer base of the stem 201, and the coil 204 includes an interface configured to connect to a power supply. The valve core 202 includes a valve core housing 205, a movable iron core 206, and a spring 207 connected to the movable iron core 206, and an air hole 208 is disposed at the top of the valve core housing 205. When the coil is not powered on, the spring 207 generates an upward force on the movable iron core 206, so that the movable iron core 206 is connected to the bottom of the valve core housing 205, and the movable iron core 206 stops air at the bottom of the valve core housing 205 from entering an inlet of the valve core. When the coil is powered on, the bottom of the valve core housing 205 separates from the movable iron core 206, and air inside the stem 201 enters the valve core 202 through the bottom of the valve core housing and comes out from the air hole 208 at the top of the valve core housing.

By using the valve 200 provided in an embodiment of this application, the movable iron core may separate from the bottom of the valve core housing through power-on control as needed, so that air inside a tire of a vehicle enters the valve through the bottom of the valve core housing and comes out from the air hole at the top of the valve core housing, thereby reducing a tire pressure of the tire of the vehicle.

Optionally, the valve core 202 may be fastened inside the stem through screw threads.

Optionally, the coil 204 may be a copper coil or a coil made of another material (for example, an aluminum coil or a silver coil).

In a possible implementation, when the coil is powered on, the fixed iron core generates a magnetic field force to attract the movable iron core, to move the movable iron core towards the fixed iron core. In a process of moving, the movable iron core separates from the bottom of the valve core housing, so that the spring connected to the movable iron core is deformed. With different power supply voltages, the magnetic field force of the fixed iron core varies, and a degree of deformation of the spring connected to the movable iron core varies.

When the coil is powered off, the magnetic field force generated by the fixed iron core disappears, the spring connected to the movable iron core returns to an original shape and drives the movable iron core to move away from the fixed iron core. In a process of moving, the movable iron core is connected to the bottom of the valve core housing. After the movable iron core is connected to the bottom of the valve core housing, air inside the tire of the vehicle cannot enter the valve core through the bottom of the valve core housing and cannot come out from the air hole at the top of the valve core housing.

It should be noted that, by using the valve provided in this embodiment of this application, a power supply voltage of the coil may be adjusted, so that a degree of separation of the movable iron core from the bottom of the valve core housing changes, to adjust an exhaust velocity of the valve. It can be understood that different tire pressure adjustment values require different exhaust velocities. Therefore, an exhaust velocity may be adjusted to be suitable for different tire pressure values by adjusting the power supply voltage of the valve of the tire. For example, when the tire pressure adjustment value is relatively large, a higher voltage value is allocated to enable the valve to exhaust air out at a high velocity. On the contrary, when the tire pressure adjustment value is relatively small, a lower voltage value is allocated to prevent the valve from exhausting air out fast, so that the valve exhausts air out at a low velocity, thereby avoiding excessive air exhaust of the valve.

The valve provided in this embodiment of this application may further include a tire pressure sensor. The tire pressure of the tire of the vehicle is detected by using the tire pressure sensor in the valve, so that a user can learn about the tire pressure of the tire of the vehicle and take a corresponding measure when the tire pressure is anomalous (for example, the tire pressure is excessively low, the tire pressure is excessively high, or the tire pressure is unbalanced), thereby further improving driving safety.

An embodiment of this application further provides a tire pressure adjustment method, to reduce a probability of collision between a vehicle and an object. The tire pressure adjustment method is applicable to a tire pressure adjustment apparatus provided in this application. The tire pressure adjustment apparatus may be a vehicle 300 or integrated in a vehicle 300.

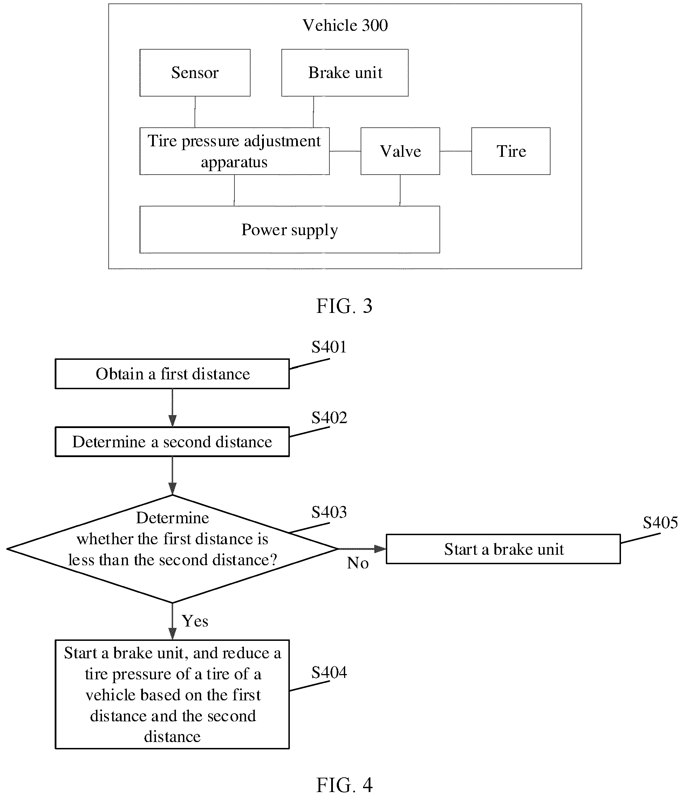

FIG. 3 is a function block diagram of a vehicle 300 according to an embodiment of this application. As shown in FIG. 3, the vehicle includes a tire pressure adjustment apparatus, a sensor, a brake unit, a valve, a tire, and a power supply.

The tire pressure adjustment apparatus is configured to perform the tire pressure adjustment method provided in this embodiment of this application. The tire pressure adjustment apparatus may be a mobile data center (mobile data center, MDC), an electronic control unit (electronic control unit, ECU), or another device. This is not particularly limited in this embodiment of this application.

The sensor is configured to detect a velocity of a vehicle and a distance between the vehicle and another object. The sensor may be a radar (for example, a lidar or a millimeter-wave radar) or another device. This is not particularly limited in this embodiment of this application.

The power supply is configured to supply power to each device (for example, the valve) in the vehicle. The power supply may be a battery or another device. This is not particularly limited in this embodiment of this application.

The vehicle 300 may be a car, a truck, a motorcycle, a bus, an excavator, a tank car, a lawn mower, an entertainment vehicle, an amusement park vehicle, construction equipment, a trolley, a golf cart, or the like. This is not particularly limited in this embodiment of this application.

FIG. 4 is a schematic flowchart of a tire pressure adjustment method according to an embodiment of this application. The method may be performed by a tire pressure adjustment apparatus provided in embodiments of this application. The method includes the following steps.

S401: A tire pressure adjustment apparatus obtains a first distance.

The first distance L1 is a distance between a vehicle and a target object, and the target object is an object ahead the vehicle in a moving direction. For example, the target object may be an obstacle shown in FIG. 1 ahead a vehicle in a moving direction.

For example, the tire pressure adjustment apparatus may obtain the first distance by using a visual sensor, for example, a camera; or a distance sensor, for example, a lidar, a millimeter-wave radar, or an ultrasonic radar; or another device configured on the vehicle.

S402: The tire pressure adjustment apparatus determines a second distance.

The second distance is a safe braking distance of the vehicle, that is, a safe braking distance required for a brake unit of the vehicle to stop the vehicle.

In a possible implementation, the tire pressure adjustment apparatus may first obtain a moving velocity of the vehicle and a coefficient of friction between a tire of the vehicle and a ground. Then, the second distance is determined based on the moving velocity and the coefficient of friction.

Optionally, the second distance L may satisfy a formula: L=K(V*V)/(2µg). K is a weight coefficient, * represents the multiplication sign, V is the moving velocity of the vehicle, µ is the coefficient of friction between the tire of the vehicle and a ground, and g is a gravity constant.

For example, an example in which the second distance L may satisfy the foregoing formula: L=K(V*V)/(2µg), where the weight coefficient K is 0.8, and the gravity constant g is 9.8 is used. The moving velocity V of the vehicle obtained by the tire pressure adjustment apparatus is 90 kilometers per hour, that is, 25 meters per second. In this case, the tire pressure adjustment apparatus determines that the second distance L=0.8*(25*25)/(2*0.7*0.9)=396.8 meters.

It should be noted that when the target object is in a non-stationary state, the moving velocity of the vehicle may be a velocity of the vehicle relative to the target object. For example, the moving direction of the vehicle is due north, and the velocity is 30 meters/second, and a moving direction of the target object is also due north, and a velocity is 15 meters/second. Because the moving direction of the vehicle is the same as the moving direction of the target object, the moving velocity of the vehicle is 30-15=15 meters/second. For another example, the moving direction of the vehicle is due south, and the velocity is 30 meters/second, and a moving direction of the target object is due north, and a velocity is 15 meters/second. Because the moving direction of the vehicle is opposite to the moving direction of the target object, the moving velocity of the vehicle is 30+15=45 meters/second.

S403: The tire pressure adjustment apparatus determines whether the first distance is less than the second distance. If the first distance is less than the second distance, S404 is performed. If the first distance is not less than the second distance, S405 is performed.

For example, the first distance L1 is 100 meters, and the second distance L is 101 meters. Because the first distance (100 meters) is less than the second distance (101 meters), the tire pressure adjustment apparatus performs S404.

For example, the first distance L1 is 100 meters, and the second distance L is 95 meters. Because the first distance (100 meters) is greater than the second distance (95 meters), the tire pressure adjustment apparatus performs S405.

It should be noted that, when the first distance is less than the second distance, because the distance (the first distance) between the vehicle and the target object is less than the safe braking distance (the second distance) of the vehicle, collision between the vehicle and the target object cannot be avoided even if the vehicle starts the brake unit immediately. Therefore, a tire pressure of the tire of the vehicle needs to be reduced, to reduce the second distance. The reduced second distance is less than the first distance. After the vehicle starts the brake unit, the vehicle may stop before colliding with an obstacle, to avoid collision between the vehicle and the target object.

On the contrary, when the first distance is not less than the second distance, because the second distance is greater than or equal to the first distance, after the vehicle starts the brake unit, the vehicle may stop before colliding with an obstacle. Therefore, the vehicle may directly start the brake unit without reducing the tire pressure of the tire of the vehicle.

In a possible implementation, the tire pressure adjustment apparatus may alternatively determine, based on the first distance and the second distance, a probability H of collision between the vehicle and the target object. Then, the vehicle determines whether H is greater than zero, and if H is greater than zero, S404 is performed.

Optionally, the probability H may satisfy a formula, that is, H=(1-first distance L1/second distance L)*100%. For example, the first distance L1 is 90 meters, and the second distance L is 100 meters, the probability H=(1-90/100)*100%=10%.

S404: The tire pressure adjustment apparatus starts the brake unit, and reduces the tire pressure of the tire of the vehicle based on the first distance and the second distance.

In a possible implementation, that the tire pressure of the tire of the vehicle is reduced based on the first distance and the second distance includes: The tire pressure adjustment apparatus determines a tire pressure adjustment value of the tire based on the first distance and the second distance, and then reduces the tire pressure of the tire based on the tire pressure adjustment value.

In a possible implementation, that the tire pressure adjustment value of the tire is determined based on the first distance and the second distance may include: The tire pressure adjustment apparatus determines a first difference value based on the first distance and the second distance, where the first difference value is a value of a difference between the second distance and the first distance, and then determines the tire pressure adjustment value based on the first difference value.

For example, the first distance is 100 meters, the second distance is 101 meters, and the safe braking distance is reduced by 2 meters each time the tire pressure is reduced by 100 kilopascals (kPa). In this case, the tire pressure adjustment apparatus may determine that the first difference value is 101-100=1 meter based on the first distance and the second distance, and determine that the tire pressure adjustment value is (1/2)* 100=50 kPa based on a correspondence between the safe braking distance and the first difference value and the tire pressure.

In a possible implementation, that the tire pressure of the tire is reduced based on the tire pressure adjustment value includes: The tire pressure adjustment apparatus first determines a target voltage based on the tire pressure adjustment value, and adjusts a power supply voltage of a valve of the tire based on the target voltage. The valve exhausts air out of the tire after being powered on, and an exhaust velocity of the valve varies with different power supply voltages.

It can be understood that different tire pressure adjustment values require different exhaust velocities. Therefore, an exhaust velocity may be adjusted to be suitable for different tire pressure values by adjusting the power supply voltage of the valve of the tire. For example, when the tire pressure adjustment value is relatively large, a higher voltage value is allocated to enable the valve to exhaust air out at a high velocity. On the contrary, when the tire pressure adjustment value is relatively small, a lower voltage value is allocated to prevent the valve from exhausting air out fast, so that the valve exhausts air out at a low velocity, thereby avoiding excessive air exhaust of the valve.

In a possible implementation, that the target voltage is determined based on the tire pressure adjustment value includes: determining that the target voltage is a first voltage if the tire pressure adjustment value is greater than a third threshold; or determining that the target voltage is a second voltage if the tire pressure adjustment value is less than or equal to a third threshold. The first voltage is greater than the second voltage.

In another possible implementation, the vehicle may determine the target voltage based on the probability H. For example, when the probability H is greater than a fourth threshold, the vehicle determines that the target voltage is the first voltage; or if the probability H is less than or equal to a fourth threshold, the vehicle determines that the target voltage is the second voltage. The fourth threshold may be 50%.

Optionally, the valve may be the valve provided in the embodiment shown in FIG. 2 of this application.

Optionally, the tire pressure adjustment apparatus may further detect whether a tire pressure value of the tire has been reduced to an expected tire pressure value. If the tire pressure value has been reduced to the expected tire pressure value, power supplied to the valve is stopped. If the tire pressure value has not been reduced to the expected tire pressure value, power continues to be supplied to the valve. The expected tire pressure value is a value of a difference between a tire pressure value of the tire of the vehicle before a tire pressure adjustment and the tire pressure adjustment value. For example, if the tire pressure value of the tire of the vehicle before the tire pressure adjustment is 290 kPa, and the tire pressure adjustment value is 50 kPa, the expected tire pressure value is 290-50=240 kPa. The vehicle stops supplying power to the valve when the tire pressure value of the tire is reduced to 240 kPa.

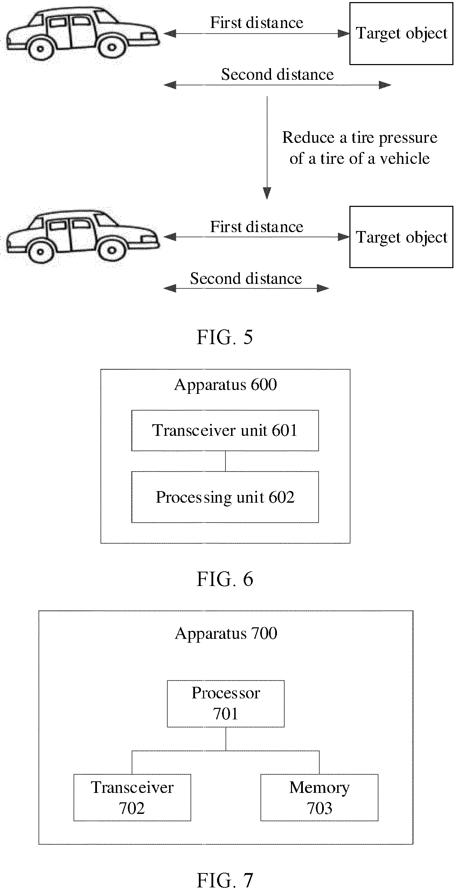

As shown in FIG. 5, before the tire pressure of the tire of the vehicle is reduced, the distance (the first distance) between the vehicle and the target object is less than the safe braking distance (the second distance) of the vehicle. If the tire pressure of the tire of the vehicle is not reduced in this case, even if the vehicle starts the brake unit immediately, collision between the vehicle and the target object cannot be avoided. After the tire pressure of the tire of the vehicle is reduced, the second distance is reduced, and the reduced second distance is less than the first distance. After the brake unit is started, the vehicle may stop before colliding with an obstacle. In this way, collision between the vehicle and the obstacle is avoided, a probability of collision between the vehicle and an object is reduced, and driving safety is improved.

S405: The tire pressure adjustment apparatus starts the brake unit.

Optionally, when starting the brake unit, the tire pressure adjustment apparatus may further tighten a safety belt to protect a driver and a passenger; and turn on double flashing lights to remind a vehicle behind to keep a safe distance. In this way, driving safety is further improved.

Another embodiment of this application provides a tire pressure adjustment method.

S406: The tire pressure adjustment apparatus determines whether a tire pressure value of any tire of the vehicle is greater than or equal to a first threshold. If the tire pressure value is greater than or equal to the first threshold, S407 is performed; or if the tire pressure value is not greater than or equal to the first threshold, S410 is performed.

Optionally, the first threshold may be 180 kPa.

It should be noted that, if the tire pressure value of the tire of the vehicle is greater than or equal to the first threshold, it indicates that the tire pressure of the tire of the vehicle is normal. On the contrary, if the tire pressure value of the tire of the vehicle is less than the first threshold, it indicates that the tire pressure of the tire of the vehicle is excessively low. In this case, the vehicle may perform S410 to notify a user of the excessively low tire pressure of the tire of the vehicle by using first information, so that the user can inflate the tire of the vehicle in time to increase the tire pressure, thereby reducing a probability of a driving accident caused by the excessively low tire pressure of the vehicle, and further improving driving safety.

S407: The tire pressure adjustment apparatus determines a second difference value.

The second difference value is a value of a difference between a tire pressure value of a first tire of the vehicle and a tire pressure value of a second tire of the vehicle.

The first tire and the second tire are any two tires of the vehicle. For example, the first tire may be a left front tire of the vehicle, and the second tire may be a right front tire of the vehicle. For another example, the first tire may be a left front tire of the vehicle, and the second tire may be a left rear tire of the vehicle.

S408: The tire pressure adjustment apparatus determines whether the second difference value is greater than a second threshold. If the second difference value is greater than the second threshold, S409 is performed.

The second threshold may be 10 kPa.

It should be noted that, if the second difference value is greater than the second threshold, it indicates that a tire pressure of the first tire and a tire pressure of the second tire are unbalanced. In this case, S409 needs to be performed to reduce the tire pressure of the first tire to balance the tire pressure of the first tire and the tire pressure of the second tire, so that a probability of a driving accident caused by an unbalanced tire pressure of the vehicle is reduced, and driving safety is further improved.

S409: The tire pressure adjustment apparatus reduces a tire pressure of the first tire.

In a possible implementation, the tire pressure adjustment apparatus may determine a tire pressure adjustment value of the first tire based on the tire pressure value of the first tire, the tire pressure value of the second tire, and the second threshold, and then reduce the tire pressure of the first tire based on the tire pressure adjustment value of the first tire.

For example, the tire pressure value of the first tire is 270 kPa, the tire pressure value of the second tire is 240 kPa, and the second threshold is 10 kPa. The vehicle determines that the tire pressure adjustment value of the first tire is 270-240-10=20 kPa, determines the target voltage based on the tire pressure adjustment value of the first tire, and adjusts the power supply voltage of the valve of the tire based on the target voltage.

S410: The tire pressure adjustment apparatus outputs first information.

The first information indicates an excessively low tire pressure value of the tire of the vehicle.

For example, the tire pressure adjustment apparatus may display the first information on a screen of a vehicle-mounted computer to remind the user that the tire pressure value of the tire of the vehicle is excessively low.

For example, the tire pressure adjustment apparatus may alternatively play the first information by using a speaker to remind the user that the tire pressure value of the tire of the vehicle is excessively low.

It should be noted that, in the method provided in this embodiment of this application, S406 to S410 may be performed alone, or may be performed in combination with S401 to S405. In other words, the tire pressure adjustment apparatus may perform only S406 to S410, and does not perform S401 to S405, to monitor and adjust tire pressure information in daily use. Alternatively, the tire pressure adjustment apparatus may first perform S401 to S405, and then perform S406 to S410, to continue to monitor tire pressure information after a tire pressure is adjusted in an emergency, thereby improving driving safety. Alternatively, S406 to S410 may be performed before S401 to S405. In other words, the tire pressure adjustment apparatus may first perform S406 to S410, and then perform S401 to S405.

The tire pressure adjustment method provided in this embodiment of this application is described with reference to FIG. 4. A tire pressure adjustment apparatus configured to perform the tire pressure adjustment method is described below with reference to FIG. 6 and FIG. 7.

It can be understood that, to implement the foregoing functions, the tire pressure adjustment apparatus includes a corresponding hardware module and/or software module for performing the functions. Algorithms and steps in the examples described with reference to embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application with reference to embodiments, but it should not be considered that the implementation goes beyond the scope of this application.

In embodiments of this application, functional modules of the tire pressure adjustment apparatus may be divided according to the foregoing method examples. For example, each functional module may be obtained through division based on each corresponding function, or two or more functions may be integrated into one processing module. The integrated module may be implemented in a form of hardware. It should be noted that, in embodiments, the division into the modules is an example and is merely logical function division, and may be other division in an actual implementation.

When each functional module is obtained through division based on each corresponding function, FIG. 6 is a possible schematic composition diagram of the tire pressure adjustment apparatus according to the foregoing embodiment. As shown in FIG. 6, the apparatus 600 may include a transceiver unit 601 and a processing unit 602. The transceiver unit 601 is configured to obtain a first distance. The processing unit 602 may implement the method performed by the tire pressure adjustment apparatus in the foregoing method embodiment, and/or another process of the technology described in this specification.

It should be noted that all related content of the steps in the foregoing method embodiments may be cited in function descriptions of corresponding functional modules. Details are not described herein again.

When an integrated unit is used, the apparatus 600 may include a processing unit, a storage unit, and a communications unit. The processing unit may be configured to control and manage an action of the apparatus 600, for example, may be configured to support the apparatus 600 in performing steps performed by the foregoing units. The storage unit may be configured to support the apparatus 600 in storing program code, data, and/or the like. The communications unit may be configured to support the apparatus 600 in communicating with another device.

The processing unit may be a processor or a controller. The processor may implement or execute various examples of logic blocks, modules, and circuits described with reference to content disclosed in this application. Alternatively, the processor may be a combination of processors implementing a computing function, for example, a combination of one or more microprocessors, or a combination of a digital signal processor (digital signal processor, DSP) and a microprocessor. The storage unit may be a memory. The communications unit may be specifically a device that communicates with another electronic device, for example, a radio frequency circuit, a Bluetooth chip, and a Wi-Fi chip.

In a possible implementation, the tire pressure adjustment apparatus according to this embodiment of this application may be an apparatus 700 having a structure shown in FIG. 7. The apparatus 700 includes a processor 701 and a transceiver 702. Related functions implemented by the transceiver unit 601 and the processing unit 602 in FIG. 6 may be implemented by the processor 701.

Optionally, the apparatus 700 may further include a memory 703. The processor 701 and the memory 703 communicate with each other through an internal connection path. A related function implemented by the storage unit in FIG. 6 may be implemented by the memory 703.

An embodiment of this application further provides a computer storage medium. The computer storage medium stores computer instructions. When the computer instructions are run on an electronic device, the electronic device is enabled to perform the foregoing steps in the related method to implement the tire pressure adjustment method in the foregoing embodiment.

An embodiment of this application further provides a computer program product. When the computer program product runs on a computer, the computer is enabled to perform the foregoing related steps to implement the tire pressure adjustment method in the foregoing embodiment.

An embodiment of this application further provides a tire pressure adjustment apparatus. The apparatus may be specifically a chip, an integrated circuit, an assembly, or a module. Specifically, the apparatus may include connected processors and a memory configured to store instructions, or the apparatus includes at least one processor, configured to obtain instructions from an external memory. When the apparatus runs, the processor may execute the instructions, so that a chip performs the tire pressure adjustment method in the foregoing method embodiments.

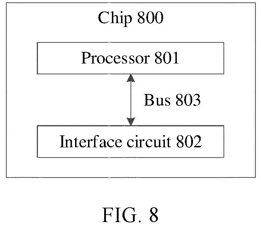

FIG. 8 is a schematic diagram of a structure of a chip 800. The chip 800 includes one or more processors 801 and an interface circuit 802. Optionally, the chip 800 may further include a bus 803.

The processor 801 may be an integrated circuit chip and has a signal processing capability. During implementation, the steps in the foregoing tire pressure adjustment method may be implemented by using a hardware integrated logic circuit in the processor 801 or instructions in a form of software.

Optionally, the processor 801 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the method and the steps disclosed in embodiments of this application. The general-purpose processor may be a microprocessor, or the processor may be any conventional processor or the like.

The interface circuit 802 may be configured to send or receive data, instructions, or information. The processor 801 may process the data, instructions, or other information received by the interface circuit 802, and send, by using the interface circuit 802, information obtained by processing.

Optionally, the chip further includes a memory. The memory may include a read-only memory and a random access memory, and provide instructions and data for the processor. A part of the memory may further include a non-volatile random access memory (non-volatile random access memory, NVRAM).

Optionally, the memory stores an executable software module or a data structure, and the processor may perform a corresponding operation by invoking operation instructions (the operation instructions may be stored in an operating system) stored in the memory.

Optionally, the chip may be used in the tire pressure adjustment apparatus or the vehicle according to embodiments of this application. Optionally, the interface circuit 802 may be configured to output an execution result of the processor 801. For the tire pressure adjustment method provided in one or more embodiments of this application, refer to the foregoing embodiments. Details are not described herein again.

It should be noted that a function corresponding to each of the processor 801 and the interface circuit 802 may be implemented through a hardware design, may be implemented through a software design, or may be implemented in a combination of software and hardware. This is not limited herein.

The tire pressure adjustment apparatus, the computer storage medium, the computer program product, or the chip provided in embodiments are all for performing the corresponding method provided above. Therefore, for beneficial effects that can be achieved by the tire pressure adjustment apparatus, the computer storage medium, the computer program product, or the chip, refer to beneficial effects in the corresponding method provided above. Details are not described herein again.

It should be understood that sequence numbers of the processes in the foregoing embodiments of this application do not mean a sequence for performing. The sequence for performing the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It can be clearly understood by a person skilled in the art that, for convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling, direct coupling, or communications connection may be implemented through some interfaces. The indirect coupling or the communications connection between the apparatuses or units may be implemented in electronic, mechanical, or another form.

The units described as separate parts may or may not be physically separate, and parts displayed as units may or may not be physical units, and may have one location, or may be distributed over a plurality of network units. All or some of the units may be selected based on an actual requirement, to achieve the objectives of the solutions of embodiments.

In addition, the functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (that may be a personal computer, a server, or a network device) to perform all or some of the steps in the foregoing method described in embodiments of this application. The foregoing storage medium includes any medium that can store program code, for example, a USB flash drive, a removable hard disk, a read only memory (Read Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A tire pressure adjustment method, comprising:
obtaining (S401) a first distance, wherein the first distance is a distance between a vehicle and a target object, and the target object is an object ahead the vehicle in a moving direction;
determining (S402) a second distance, wherein the second distance is a safe braking distance of the vehicle; and
if the first distance is less than the second distance, determining (S403) a tire pressure adjustment value of a tire based on the first distance and the second distance;
**characterized in that** the method further comprises:
determining a target voltage based on the tire pressure adjustment value; and
adjusting a power supply voltage of a valve (200) of the tire based on the target voltage, wherein the valve (200) exhausts air out of the tire after being powered on, and an exhaust velocity of the valve (200) varies with different power supply voltages.

2. The method according to claim 1, wherein the determining a second distance comprises:
obtaining a moving velocity of the vehicle and a coefficient of friction between the tire of the vehicle and a ground; and
determining the second distance based on the moving velocity and the coefficient of friction.

3. The method according to claim 1 or 2, wherein the determining a tire pressure adjustment value of the tire based on the first distance and the second distance comprises:
determining a first difference value based on the first distance and the second distance, wherein the first difference value is a value of a difference between the second distance and the first distance; and
determining the tire pressure adjustment value based on the first difference value.

4. The method according to any one of claims 1 to 3, wherein the method further comprises:
outputting (S410) first information if a tire pressure value of any tire of the vehicle is less than a first threshold, wherein the first information indicates an excessively low tire pressure value of the tire of the vehicle.

5. The method according to any one of claims 1 to 4, wherein the method further comprises:
determining (S407) a second difference value if the tire pressure value of the tire of the vehicle is greater than or equal to the first threshold, wherein the second difference value is a value of a difference between a tire pressure value of a first tire of the vehicle and a tire pressure value of a second tire of the vehicle; and
reducing (S409) a tire pressure of the first tire if the second difference value is greater than a second threshold.

6. The method according to any one of claims 1 to 5, wherein the valve (200) comprising a stem (201), and wherein:
a valve core (202) and a fixed iron core (203) are disposed inside the stem (201), a coil (204) is wound at an outer base of the stem (201), the fixed iron core (203) is fixed at an inner base of the stem (201), and the coil comprises an interface configured to connect to a power supply;
the valve core (202) comprises a valve core housing (205), a movable iron core (206), and a spring (207) connected to the movable iron core (206), and an air hole (208) is disposed at the top of the valve core housing (205);
when the coil is not powered on, the spring (207) generates an upward force on the movable iron core (206), so that the movable iron core (206) is connected to the bottom of the valve core housing (205); and
when the coil is powered on, the bottom of the valve core housing (205) separates from the movable iron core (206), and air inside the stem (201) enters the valve core through the bottom of the valve core housing (205) and comes out from the air hole at the top of the valve core housing (205).

7. A tire pressure adjustment apparatus (700), comprising a processor (701), wherein the processor (701) is configured to perform a method comprising:
obtaining a first distance (S401), wherein the first distance is a distance between a vehicle and a target object, and the target object is an object ahead the vehicle in a moving direction;
determining a second distance (S402), wherein the second distance is a safe braking distance of the vehicle; and
if the first distance is less than the second distance, determining a tire pressure adjustment value of a tire based on the first distance and the second distance;
**characterized in that** the method further comprises:
determining a target voltage based on the tire pressure adjustment value; and
adjusting a power supply voltage of a valve (200) of the tire based on the target voltage, wherein the valve (200) exhausts air out of the tire after being powered on, and an exhaust velocity of the valve (200) varies with different power supply voltages.

8. The apparatus (700) according to claim 7, wherein the determining a second distance comprises:
obtaining a moving velocity of the vehicle and a coefficient of friction between the tire of the vehicle and a ground; and
determining the second distance based on the moving velocity and the coefficient of friction.

9. The apparatus (700) according to claim 7 or 8, wherein the determining a tire pressure adjustment value of the tire based on the first distance and the second distance comprises:
determining a first difference value based on the first distance and the second distance, wherein the first difference value is a value of a difference between the second distance and the first distance; and
determining the tire pressure adjustment value based on the first difference value.

10. The apparatus (700) according to any one of claims 7 to 9, wherein the method further comprises:
outputting (S410) first information if a tire pressure value of any tire of the vehicle is less than a first threshold, wherein the first information indicates an excessively low tire pressure value of the tire of the vehicle.

11. The apparatus (700) according to any one of claims 7 to 10, wherein the method further comprises:
determining (S407) a second difference value if the tire pressure value of the tire of the vehicle is greater than or equal to the first threshold, wherein the second difference value is a value of a difference between a tire pressure value of a first tire of the vehicle and a tire pressure value of a second tire of the vehicle; and
reducing (S409) a tire pressure of the first tire if the second difference value is greater than a second threshold.

12. The apparatus (700) according to any one of claims 7 to 11, wherein the apparatus further comprise a memory configured to store instructions, and the processor (701) is configured to perform the method by executing the instructions in the memory.

13. A vehicle (300), comprising the tire pressure adjustment apparatus (700) according to any one of claims 7 to 12 and a tire, wherein the tire has a valve (200) which comprises a stem (201), and wherein:
a valve core (202) and a fixed iron core (203) are disposed inside the stem (201), a coil (204) is wound at an outer base of the stem (201), the fixed iron core (203) is fixed at an inner base of the stem (201), and the coil (204) comprises an interface configured to connect to a power supply;
the valve core (202) comprises a valve core housing (205), a movable iron core (206), and a spring (207) connected to the movable iron core (206), and an air hole (208) is disposed at the top of the valve core housing (205);
when the coil (204) is not powered on, the spring (207) generates an upward force on the movable iron core (206), so that the movable iron core (206) is connected to the bottom of the valve core housing (205); and
when the coil (204) is powered on, the bottom of the valve core housing (202) separates from the movable iron core (206), and air inside the stem (201) enters the valve core (202) through the bottom of the valve core housing (205) and comes out from the air hole (208) at the top of the valve core housing (205).

14. The vehicle (300) according to claim 13, wherein when the coil (204) is powered on, the fixed iron core (203) generates a magnetic field force to attract the movable iron core (206) to separate from the bottom of the valve core housing (205), and the magnetic field force of the fixed iron core (203) varies with different power supply voltages.

15. The vehicle (300) according to claim 13 or 14, wherein the valve (202) further comprises a tire pressure sensor configured to detect tire pressure of a tire of the vehicle (300).

## Patentansprüche

1. Reifendruckeinstellverfahren, umfassend:
Erlangen (S401) eines ersten Abstands, wobei der erste Abstand ein Abstand zwischen einem Fahrzeug und einem Zielobjekt ist und das Zielobjekt ein Objekt ist, das sich in einer Bewegungsrichtung vor dem Fahrzeug befindet;
Bestimmen (S402) eines zweiten Abstands, wobei der zweite Abstand ein sicherer Bremsabstand des Fahrzeugs ist; und,
wenn der erste Abstand kleiner als der zweite Abstand ist, Bestimmen (S403) eines Reifendruckeinstellwerts eines Reifens basierend auf dem ersten Abstand und dem zweiten Abstand;
**dadurch gekennzeichnet, dass** das Verfahren ferner Folgendes umfasst:
Bestimmen einer Zielspannung basierend auf dem Reifendruckeinstellwert; und
Einstellen einer Energieversorgungsspannung eines Ventils (200) des Reifens basierend auf der Zielspannung, wobei das Ventil (200) nach dem Einschalten Luft aus dem Reifen ausströmen lässt und eine Ausströmgeschwindigkeit des Ventils (200) bei unterschiedlichen Energieversorgungsspannungen variiert.

2. Verfahren nach Anspruch 1, wobei das Bestimmen eines zweiten Abstands Folgendes umfasst:
Erlangen einer Bewegungsgeschwindigkeit des Fahrzeugs und eines Reibungskoeffizienten zwischen dem Reifen des Fahrzeugs und einem Boden; und
Bestimmen des zweiten Abstands basierend auf der Bewegungsgeschwindigkeit und dem Reibungskoeffizienten.

3. Verfahren nach Anspruch 1 oder 2, wobei das Bestimmen eines Reifendruckeinstellwerts des Reifens basierend auf dem ersten Abstand und dem zweiten Abstand Folgendes umfasst:
Bestimmen eines ersten Differenzwerts basierend auf dem ersten Abstand und dem zweiten Abstand, wobei der erste Differenzwert ein Wert einer Differenz zwischen dem zweiten Abstand und dem ersten Abstand ist; und
Bestimmen des Reifendruckeinstellwerts basierend auf dem ersten Differenzwert.

4. Verfahren nach einem der Ansprüche 1 bis 3, wobei das Verfahren ferner Folgendes umfasst:
Ausgeben (S410) von ersten Informationen, wenn ein Reifendruckwert eines beliebigen Reifens des Fahrzeugs unter einem ersten Schwellenwert liegt, wobei die ersten Informationen einen zu niedrigen Reifendruckwert des Reifens des Fahrzeugs anzeigen.

5. Verfahren nach einem der Ansprüche 1 bis 4, wobei das Verfahren ferner Folgendes umfasst:
Bestimmen (S407) eines zweiten Differenzwerts, wenn der Reifendruckwert des Reifens des Fahrzeugs größer als oder gleich dem ersten Schwellenwert ist, wobei der zweite Differenzwert ein Wert einer Differenz zwischen einem Reifendruckwert eines ersten Reifens des Fahrzeugs und einem Reifendruckwert eines zweiten Reifens des Fahrzeugs ist; und
Verringern (S409) eines Reifendrucks des ersten Reifens, wenn der zweite Differenzwert größer als ein zweiter Schwellenwert ist.

6. Verfahren nach einem der Ansprüche 1 bis 5, wobei das Ventil (200) einen Schaft (201) umfasst und wobei:
ein Ventilkern (202) und ein fester Eisenkern (203) in dem Inneren des Schafts (201) angeordnet sind, eine Spule (204) um eine äußere Basis des Schafts (201) gewickelt ist, der feste Eisenkern (203) an einer inneren Basis des Schafts (201) befestigt ist und die Spule eine Schnittstelle umfasst, die dazu konfiguriert ist, mit einer Energieversorgung verbunden zu werden;
der Ventilkern (202) ein Ventilkerngehäuse (205), einen beweglichen Eisenkern (206) und eine mit dem beweglichen Eisenkern (206) verbundene Feder (207) umfasst und an der Oberseite des Ventilkerngehäuses (205) eine Luftöffnung (208) angeordnet ist;
wenn die Spule nicht eingeschaltet ist, die Feder (207) eine nach oben gerichtete Kraft auf den beweglichen Eisenkern (206) erzeugt, so dass der bewegliche Eisenkern (206) mit dem Boden des Ventilkerngehäuses (205) verbunden ist; und,
wenn die Spule eingeschaltet ist, sich der Boden des Ventilkerngehäuses (205) von dem beweglichen Eisenkern (206) trennt und Luft in dem Inneren des Schafts (201) durch den Boden des Ventilkerngehäuses (205) in den Ventilkern gelangt und aus der Luftöffnung an der Oberseite des Ventilkerngehäuses (205) ausströmt.

7. Reifendruckeinstellvorrichtung (700), umfassend einen Prozessor (701), wobei der Prozessor (701) dazu konfiguriert ist, ein Verfahren durchzuführen, das Folgendes umfasst:
Erlangen eines ersten Abstands (S401), wobei der erste Abstand ein Abstand zwischen einem Fahrzeug und einem Zielobjekt ist und das Zielobjekt ein Objekt ist, das sich in einer Bewegungsrichtung vor dem Fahrzeug befindet;
Bestimmen eines zweiten Abstands (S402), wobei der zweite Abstand ein sicherer Bremsabstand des Fahrzeugs ist; und,
wenn der erste Abstand kleiner als der zweite Abstand ist, Bestimmen eines Reifendruckeinstellwerts eines Reifens basierend auf dem ersten Abstand und dem zweiten Abstand;
**dadurch gekennzeichnet, dass** das Verfahren ferner Folgendes umfasst:
Bestimmen einer Zielspannung basierend auf dem Reifendruckeinstellwert; und
Einstellen einer Energieversorgungsspannung eines Ventils (200) des Reifens basierend auf der Zielspannung, wobei das Ventil (200) nach dem Einschalten Luft aus dem Reifen ausströmen lässt und eine Ausströmgeschwindigkeit des Ventils (200) bei unterschiedlichen Energieversorgungsspannungen variiert.

8. Vorrichtung (700) nach Anspruch 7, wobei das Bestimmen eines zweiten Abstands Folgendes umfasst:
Erlangen einer Bewegungsgeschwindigkeit des Fahrzeugs und eines Reibungskoeffizienten zwischen dem Reifen des Fahrzeugs und einem Boden; und
Bestimmen des zweiten Abstands basierend auf der Bewegungsgeschwindigkeit und dem Reibungskoeffizienten.

9. Vorrichtung (700) nach Anspruch 7 oder 8, wobei das Bestimmen eines Reifendruckeinstellwerts des Reifens basierend auf dem ersten Abstand und dem zweiten Abstand Folgendes umfasst:
Bestimmen eines ersten Differenzwerts basierend auf dem ersten Abstand und dem zweiten Abstand, wobei der erste Differenzwert ein Wert einer Differenz zwischen dem zweiten Abstand und dem ersten Abstand ist; und
Bestimmen des Reifendruckeinstellwerts basierend auf dem ersten Differenzwert.

10. Vorrichtung (700) nach einem der Ansprüche 7 bis 9, wobei das Verfahren ferner Folgendes umfasst:
Ausgeben (S410) von ersten Informationen, wenn ein Reifendruckwert eines beliebigen Reifens des Fahrzeugs unter einem ersten Schwellenwert liegt, wobei die ersten Informationen einen zu niedrigen Reifendruckwert des Reifens des Fahrzeugs anzeigen.

11. Vorrichtung (700) nach einem der Ansprüche 7 bis 10, wobei das Verfahren ferner Folgendes umfasst:
Bestimmen (S407) eines zweiten Differenzwerts, wenn der Reifendruckwert des Reifens des Fahrzeugs größer als oder gleich dem ersten Schwellenwert ist, wobei der zweite Differenzwert ein Wert einer Differenz zwischen einem Reifendruckwert eines ersten Reifens des Fahrzeugs und einem Reifendruckwert eines zweiten Reifens des Fahrzeugs ist; und
Verringern (S409) eines Reifendrucks des ersten Reifens, wenn der zweite Differenzwert größer als ein zweiter Schwellenwert ist.

12. Vorrichtung (700) nach einem der Ansprüche 7 bis 11, wobei die Vorrichtung ferner einen Speicher umfasst, der dazu konfiguriert ist, Anweisungen zu speichern, und der Prozessor (701) dazu konfiguriert ist, das Verfahren durch Ausführen der Anweisungen in dem Speicher durchzuführen.

13. Fahrzeug (300), umfassend die Reifendruckeinstellvorrichtung (700) nach einem der Ansprüche 7 bis 12 und einen Reifen, wobei der Reifen ein Ventil (200) aufweist, das einen Schaft (201) umfasst, und wobei:
ein Ventilkern (202) und ein fester Eisenkern (203) in dem Inneren des Schafts (201) angeordnet sind, eine Spule (204) um eine äußere Basis des Schafts (201) gewickelt ist, der feste Eisenkern (203) an einer inneren Basis des Schafts (201) befestigt ist und die Spule (204) eine Schnittstelle umfasst, die dazu konfiguriert ist, mit einer Energieversorgung verbunden zu werden;
der Ventilkern (202) ein Ventilkerngehäuse (205), einen beweglichen Eisenkern (206) und eine mit dem beweglichen Eisenkern (206) verbundene Feder (207) umfasst und an der Oberseite des Ventilkerngehäuses (205) eine Luftöffnung (208) angeordnet ist;
wenn die Spule (204) nicht eingeschaltet ist, die Feder (207) eine nach oben gerichtete Kraft auf den beweglichen Eisenkern (206) erzeugt, so dass der bewegliche Eisenkern (206) mit dem Boden des Ventilkerngehäuses (205) verbunden ist; und,
wenn die Spule (204) eingeschaltet ist, sich der Boden des Ventilkerngehäuses (205) von dem beweglichen Eisenkern (206) trennt und Luft in dem Inneren des Schafts (201) durch den Boden des Ventilkerngehäuses (205) in den Ventilkern (202) gelangt und aus der Luftöffnung (208) an der Oberseite des Ventilkerngehäuses (205) ausströmt.

14. Fahrzeug (300) nach Anspruch 13, wobei, wenn die Spule (204) eingeschaltet ist, der feste Eisenkern (203) eine magnetische Feldkraft erzeugt, um den beweglichen Eisenkern (206) anzuziehen, so dass er sich von dem Boden des Ventilkerngehäuses (205) trennt, und wobei die magnetische Feldkraft des festen Eisenkerns (203) mit unterschiedlichen Energieversorgungsspannungen variiert.

15. Fahrzeug (300) nach Anspruch 13 oder 14, wobei das Ventil (202) ferner einen Reifendrucksensor umfasst, der dazu konfiguriert ist, den Reifendruck eines Reifens des Fahrzeugs (300) zu erfassen.

## Revendications

1. Procédé de réglage de pression de pneus, comprenant :
l'obtention (S401) d'une première distance, dans lequel la première distance est une distance entre un véhicule et un objet cible, et l'objet cible est un objet devant le véhicule dans une direction de déplacement ;
la détermination (S402) d'une seconde distance, dans lequel la seconde distance est une distance de freinage de sécurité du véhicule ; et
si la première distance est inférieure à la seconde distance, la détermination (S403) d'une valeur de réglage de pression de pneus d'un pneu sur la base de la première distance et de la seconde distance ;
**caractérisé en ce que** le procédé comprend également :
la détermination d'une tension cible sur la base de la valeur de réglage de pression de pneus ; et
le réglage d'une tension d'alimentation d'une valve (200) du pneu sur la base de la tension cible, dans lequel la valve (200) évacue l'air du pneu après avoir été mise sous tension, et une vitesse d'échappement de la valve (200) varie avec différentes tensions d'alimentation.

2. Procédé selon la revendication 1, dans lequel la détermination d'une seconde distance comprend :
l'obtention d'une vitesse de déplacement du véhicule et d'un coefficient de frottement entre le pneu du véhicule et un sol ; et
la détermination de la seconde distance sur la base de la vitesse de déplacement et du coefficient de frottement.

3. Procédé selon la revendication 1 ou 2, dans lequel la détermination d'une valeur de réglage de pression de pneus sur la base de la première et de la seconde distance comprend :
la détermination d'une première valeur de différence sur la base de la première distance et de la seconde distance, dans lequel la première valeur de différence est une valeur d'une différence entre la seconde distance et la première distance ; et
la détermination de la valeur de réglage de pression de pneus sur la base de la première valeur de différence.

4. Procédé selon l'une quelconque des revendications 1 à 3, dans lequel le procédé comprend également :
la délivrance (S410) d'une première information si une valeur de pression de pneus d'un quelconque pneu du véhicule est inférieure à un premier seuil, dans lequel la première information indique une valeur de pression de pneus excessivement basse du pneu du véhicule.

5. Procédé selon l'une quelconque des revendications 1 à 4, dans lequel le procédé comprend également :
la détermination (S407) d'une seconde valeur de différence si la valeur de pression de pneus du pneu du véhicule est supérieure ou égale au premier seuil, dans lequel la seconde valeur de différence est une valeur d'une différence entre une valeur de pression de pneus d'un premier pneu du véhicule et une valeur de pression de pneus d'un second pneu du véhicule ; et
la réduction (S409) d'une pression de pneus du premier pneu si la seconde valeur de différence est supérieure à un second seuil.

6. Procédé selon l'une quelconque des revendications 1 à 5, dans lequel la valve (200) comprenant une tige (201), et dans lequel :
un noyau de valve (202) et un noyau de fer fixe (203) sont disposés à l'intérieur de la tige (201), une bobine (204) est enroulée au niveau d'une base extérieure de la tige (201), le noyau de fer fixe (203) est fixé au niveau d'une base intérieure de la tige (201), et la bobine comprend une interface configurée pour se connecter à une alimentation électrique ;
le noyau de valve (202) comprend un boîtier de noyau de valve (205), un noyau de fer mobile (206), et un ressort (207) connecté au noyau de fer mobile (206), et un trou d'air (208) est disposé au sommet du boîtier de noyau de valve (205) ;
lorsque la bobine n'est pas sous tension, le ressort (207) génère une force vers le haut sur le noyau de fer mobile (206), de sorte que le noyau de fer mobile (206) est relié au fond du boîtier du noyau de valve (205) ; et
lorsque la bobine est sous tension, le bas du boîtier du noyau de valve (205) se sépare du noyau de fer mobile (206), et l'air à l'intérieur de la tige (201) pénètre dans le noyau de valve par le bas du boîtier du noyau de valve (205) et sort par le trou d'air au sommet du boîtier du noyau de valve (205).

7. Appareil de réglage de pression de pneus (700), comprenant un processeur (701), dans lequel le processeur (701) est configuré pour réaliser un procédé comprenant :
l'obtention d'une première distance (S401), dans lequel la première distance est une distance entre un véhicule et un objet cible, et l'objet cible est un objet devant le véhicule dans une direction de déplacement ;
la détermination d'une seconde distance (S402), dans lequel la seconde distance est une distance de freinage de sécurité du véhicule ; et
si la première distance est inférieure à la seconde distance, la détermination d'une valeur de réglage de pression de pneus d'un pneu sur la base de la première distance et de la seconde distance ;
**caractérisé en ce que** le procédé comprend également :
la détermination d'une tension cible sur la base de la valeur de réglage de pression de pneus ; et
le réglage d'une tension d'alimentation d'une valve (200) du pneu sur la base de la tension cible, dans lequel la valve (200) évacue l'air du pneu après avoir été mise sous tension, et une vitesse d'échappement de la valve (200) varie avec différentes tensions d'alimentation.

8. Appareil (700) selon la revendication 7, dans lequel la détermination d'une seconde distance comprend :
l'obtention d'une vitesse de déplacement du véhicule et d'un coefficient de frottement entre le pneu du véhicule et un sol ; et
la détermination de la seconde distance sur la base de la vitesse de déplacement et du coefficient de frottement.

9. Appareil (700) selon la revendication 7 ou 8, dans lequel la détermination d'une valeur de réglage de pression de pneus sur la base de la première et de la seconde distance comprend :
la détermination d'une première valeur de différence sur la base de la première distance et de la seconde distance, dans lequel la première valeur de différence est une valeur d'une différence entre la seconde distance et la première distance ; et
la détermination de la valeur de réglage de pression de pneus sur la base de la première valeur de différence.

10. Appareil (700) selon l'une quelconque des revendications 7 à 9, dans lequel le procédé comprend également :
la délivrance (S410) d'une première information si une valeur de pression de pneus d'un quelconque pneu du véhicule est inférieure à un premier seuil, dans lequel la première information indique une valeur de pression de pneus excessivement basse du pneu du véhicule.

11. Appareil (700) selon l'une quelconque des revendications 7 à 10, dans lequel le procédé comprend également :
la détermination (S407) d'une seconde valeur de différence si la valeur de pression de pneus du pneu du véhicule est supérieure ou égale au premier seuil, dans lequel la seconde valeur de différence est une valeur d'une différence entre une valeur de pression de pneus d'un premier pneu du véhicule et une valeur de pression de pneus d'un second pneu du véhicule ; et
la réduction (S409) d'une pression de pneus du premier pneu si la seconde valeur de différence est supérieure à un second seuil.

12. Appareil (700) selon l'une quelconque des revendications 7 à 11, dans lequel l'appareil comprend également une mémoire configurée pour stocker des instructions, et le processeur (701) est configuré pour réaliser le procédé en exécutant les instructions dans la mémoire.

13. Véhicule (300), comprenant l'appareil de réglage de pression de pneus (700) selon l'une quelconque des revendications 7 à 12 et un pneu, dans lequel le pneu a une valve (200) qui comprend une tige (201), et dans lequel :
un noyau de valve (202) et un noyau de fer fixe (203) sont disposés à l'intérieur de la tige (201), une bobine (204) est enroulée au niveau d'une base extérieure de la tige (201), le noyau de fer fixe (203) est fixé au niveau d'une base intérieure de la tige (201), et la bobine (204) comprend une interface configurée pour se connecter à une alimentation électrique ;
le noyau de valve (202) comprend un boîtier de noyau de valve (205), un noyau de fer mobile (206), et un ressort (207) connecté au noyau de fer mobile (206), et un trou d'air (208) est disposé au sommet du boîtier de noyau de valve (205) ;
lorsque la bobine (204) n'est pas sous tension, le ressort (207) génère une force vers le haut sur le noyau de fer mobile (206), de sorte que le noyau de fer mobile (206) est relié au fond du boîtier du noyau de valve (205) ; et
lorsque la bobine (204) est sous tension, le bas du boîtier du noyau de valve (202) se sépare du noyau de fer mobile (206), et l'air à l'intérieur de la tige (201) pénètre dans le noyau de valve (202) par le bas du boîtier du noyau de valve (205) et sort par le trou d'air (208) au sommet du boîtier du noyau de valve (205).

14. Véhicule (300) selon la revendication 13, dans lequel lorsque la bobine (204) est sous tension, le noyau de fer fixe (203) génère une force de champ magnétique pour attirer le noyau de fer mobile (206) pour qu'il se sépare du fond du boîtier de noyau de valve (205), et la force de champ magnétique du noyau de fer fixe (203) varie avec différentes tensions d'alimentation électrique.

15. Véhicule (300) selon la revendication 13 ou 14, dans lequel la valve (202) comprend également un capteur de pression de pneus configuré pour détecter une pression de pneus d'un pneu du véhicule (300).
